# EUROPÄISCHE PATENTSCHRIFT

(11) **EP 1 153 957 B1**
(45) Veröffentlichungstag und Bekanntmachung des Hinweises auf die Patenterteilung: **01.02.2006**
(21) Anmeldenummer: 01110252.2
(22) Anmeldetag: 25.04.2001
(51) Int. Cl.: C08G 69/36, C09J 177/00

(54) **Niedrigschmelzende Copolyamide sowie deren Verwendung als Schmelzklebemittel**
Low-melting copolyamides and their use as hot-melt adhesives
Copolyamides à bas point de fusion et leur utilisation comme colles fusibles

(30) Priorität: 10.05.2000 DE 10022701
(43) Veröffentlichungstag der Anmeldung: 14.11.2001
(73) Patentinhaber: EMS-Chemie AG, 7013 Domat/Ems (CH)
(72) Erfinder: Poessnecker, Gerhard, Dr.rer.nat., 7014 Trin (CH); Spindler, Jürgen, Dr.rer.nat., 7013 Domat/Ems (CH); Kinkelin, Eberhard, Dr.rer.nat., 7000 Chur (CH)
(74) Vertreter: Becker Kurig Straus

(56) Entgegenhaltungen:
- EP-A- 0 965 627
- DE-A- 2 324 159
- DE-A- 3 248 776
- US-A- 3 933 762

## Beschreibung

Die Erfindung betrifft aus mindestens sechs Komponenten aufgebaute niedrigschmelzende Copolyamide, welche bevorzugt als Schmelzkleber für Textilien und im technischen Bereich eingesetzt werden können.

Schmelzkleber auf Basis aliphatischer Copolyamide zur Herstellung waschbeständiger und gegen chemische Reinigung beständiger Verklebungen von Einlagestoffen mit Oberstoffen sind seit langem bekannt und werden in großem Maße weltweit eingesetzt. Solche Polyamide sind beispielsweise in DE-OS 1594233 offenbart. Die Einstellung der zum Verkleben der Textilien erwünschten Schmelzetemperaturen von 80°C bis 130°C erfolgt dadurch, daß zusätzlich zu den üblicherweise verwendeten Bestandteilen Caprolactam/ω-Aminocapronsäure und Laurinlactam/ω-Aminolaurinsäure weitere ω-Aminocarbonsäuren und weitere Polyamidbildner wie 6,6-Salz, 6,9-Salz, 6,10-Salz und/oder 6,12-Salz in unterschiedlichen Mengenverhältnissen kombiniert werden.

Die bekannten Polyamide weisen im Schmelzzustand eine ausreichend hohe Klebkraft auf, so daß sie in der Textilindustrie zum Heißsiegeln und Verkleben von Geweben verwendet werden können. Sie besitzen auch eine gute Beständigkeit gegenüber den bei der chemischen Reinigung von Textilien eingesetzten Lösungsmitteln und gegenüber den in der Textilindustrie üblichen Waschtemperaturen von bis zu 80°C. Diese Beständigkeit ist jedoch weitgehend von einem hohen Gehalt an Laurinlactam und/oder 11-Aminoundecansäure bzw. Dimer-Fettsäure abhängig. Mit zunehmendem Gehalt an diesen Grundbausteinen steigt zwar die Waschbeständigkeit bei höheren Waschtemperaturen an, gleichzeitig, tritt jedoch ein unerwünschtes Ansteigen der Schmelzetemperatur der Copolyamide auf. Die bekannten Copolyamide können daher nicht zum Heißsiegeln von temperaturempfindlichen Substraten wie Leder, temperaturempfindliche Natur-und/oder Kunststofffleecen, -filzen und -flauschen eingesetzt werden. Als Lösung für dieses Problem wurde in der DE-OS 2324160 und der DE-OS 2324159 ein große Anteile Caprolactam enthaltendes Copolyamid vorgeschlagen, das niedrige Schmelztemperaturen von weniger als 115°C besitzt. In diesem Copolyamid müssen 20-40 Gewichts-% Caprolactam enthalten sein. Dieses Copolyamid ist zum Heißsiegeln temperaturempfindlicher Substrate geeignet und besitzt trotz niedriger Klebetemperaturen eine hohe Klebkraft und eine hohe Beständigkeit gegenüber chemischen Reinigungsmitteln. Allerdings ist nachteilig, daß durch den tiefen Schmelzpunkt bedingt eine geringere Waschbeständigkeit resultiert. Dies wird ebenfalls bestätigt durch die DE-PS 37 30 504.

Für das Erreichen eines tiefen Schmelzpunktes hat sich in der Praxis gezeigt, daß man mindestens zwei Dicarbonsäuren als Komponenten des Polyamides einsetzen muß, wobei auch ein Teil der gängigen aliphatischen Dicarbonsäuren durch aromatische Verbindungen substituiert sein kann. Allerdings darf der Anteil der aromatischen Disäure(n) nicht größer als 10 mol-% (bezogen auf die Gesamtrezeptur) sein, da bei einer weiteren Erhöhung des aromatischen Anteils Produkte mit hohem Tg entstehen, die nicht mehr kristallisieren und vollständig amorph bleiben. Derartige Substanzen sind als Schmelzkleber zumeist nicht geeignet, da sie schlechte Beständigkeiten bei Wäsche und chemischer Reinigung aufweisen.

Auf der anderen Seite wird an einen Schmelzkleber bei vielen Anwendungen auch die Anforderung gestellt, daß er nach der Applikation noch eine gewisse Zeit verarbeitbar ist. Dies trifft oft bei Direktkaschierungen zu, wo eine gewisse Zeit zwischen Beschichtung und Laminierung liegt und der Kleber in der dazwischen liegenden Zeit nichts an seiner Klebewirkung verlieren soll.

Die Zeit in der der Kleber seine Klebekraft entfalten kann wird im Fachjargon auch oft als offene Zeit bezeichnet

Nach Definition in der ASTM Norm D 4497-85 entspricht die offene Zeit der zur Verfügung stehenden Zeit zwischen dem Auftrag des Klebers auf das erste Substrat und dem Verkleben mit dem zweiten Substrat, wobei die Trennkraft noch mindestens 50% des eigentlichen Wertes betragen muß.

Klassische ternäre Copolyamide und deren Verwendung werden in DE-OS 2204492 als Schmelzkleber beschrieben. Diese Substanzen zeigen recht gute textiltechnische Eigenschaften hinsichtlich Wasch- und Reinigungsbeständigkeit, haben aber den Nachteil, daß der Schmelzpunkt dieser Substanzen noch relativ hoch liegt und damit ein schonendes und energiesparendes Verkleben nicht möglich ist.

In den Patentschriften DE 2324159 und DE 2324160 werden tiefschmelzende Copolyamide beschrieben. Diese zeigen aber bedingt durch den tiefen Schmelzpunkt eine verringerte Waschbeständigkeit.

In der Offenlegungsschrift DE 3248776 werden ebenfalls tiefschmelzende Copolyamide beschriebeh. Diese sind besonders zur Haftung auf silikonisierten Oberstoffen geeignet und enthalten neben Lactamen und C₆₋₁₂-Dicarbonsäuren auch C₆₋₁₂ Diamine, wobei mindestens 30% dieser Diamine aus einfach verzweigten aliphatischen Diaminen mit. 6 Kohlenstoffatomen bestehen.

Weitere Schmelzkleber mit einem deutlich höheren Gehalt an zusätzlichen Diaminen (neben Hexamethylendiamin) sind ebenfalls bereits in der Literatur beschrieben.
So werden in DE-OS- 2509791 Copolyamide genannt, welche mindestens 70 mol-% von Diaminen mit mindestens einer sekundären Aminogruppe enthalten.
Die dort beschriebenen Copolyamide werden auf Grund Ihrer Hafteigenschaften besonders zur Kantenumleimung in der Möbelindustrie verwendet.

Die Patentschrift EP 0965627 beschreibt schließlich Copolyamide mit langer offener Zeit. Allerdings ist bei den dort beschriebenen Verbindungen die Beständigkeit gegenüber chemischer Reinigung nicht gegeben.

Es ist daher Aufgabe der vorliegenden Erfindung neue niedrigschmelzende Copolyamide bereit zu stellen, die als Schmelzkleber verwendet werden können, gute Beständigkeiten gegenüber waschen und chemischer Reinigung aufweisen und eine verlängerte offene Zeit besitzen.

Diese Aufgabe wird durch die Copolyamide gemäß Anspruch 1 sowie durch die Verwendungen gemäß den Ansprüchen 8 und 9 gelöst.

In den Unteransprüchen sind vorteilhafte Ausführungsformen der Erfindung enthalten.

Gegenstand der Erfindung sind Copolyamide mit der folgenden Zusammensetzung:
- Caprolactam 10 - 45 mol-%
- Laurinlactam, und/oder 12-Aminododecansäure 30 - 55 mol-%
- mindestens 2 Dicarbonsäuren 20 - 50 mol-% der folgenden Verbindungen:
   aliphatische α, ω-Dicarbonsäuren mit 6 bis einschließlich 14 C-Atomen, Terephthalsäure, Isophthalsäure und 2,6-Naphthalindicarbonsäure, wobei der Anteil an aromatischen Dicarbonsäuren kleiner als 10 mol%, ist bezogen auf die Gesamtmenge der zuvorgenannten Komponenten, die sich auf 100 mol-% ergänzen,
- zu den Dicarbonsäuren eine äquimolare Menge eines Diamingemischs, ausgewählt aus der Gruppe aus folgenden Substanzen:
   Hexamethylendiamin, Piperazin und/oder 2-Methyl-1,5-diaminopentan,
   wobei der molare Anteil an Hexamethylendiamin, bezogen auf das Diamingemisch, zwischen 75 und 95 mol-% beträgt.

In einer bevorzugten Ausführungsform betrifft die Erfindung Copolyamide, wobei die Monomeren in folgendem molaren Verhältnis vorliegen:
- Caprolactam 15 - 40 mol-%
- Laurinlactam, und/oder 12-Aminododecansäure 30 - 45 mol-%
- mindestens 2 Dicarbonsäuren 20 - 40 mol-%
   der folgenden Verbindungen:
   aliphatische α, ω-Dicarbonsäuren mit 6 bis einschließlich 14 C-Atomen,
   Terephthalsäure, Isophthalsäure und 2,6-Naphthalindicarbonsäure, wobei der Anteil an aromatischen Dicarbonsäuren kleiner als 10 mol%, ist bezogen auf die Gesamtmenge der zuvorgenannten Komponenten, die sich auf 100 mol-% ergänzen,
- zu den Dicarbonsäuren eine äquimolare Menge eines Diamingemischs, ausgewählt aus der Gruppe aus den folgenden Substanzen:
   Hexamethylendiamin, Piperazin und/oder 2-Methyl-1,5-diaminopentan,
   wobei der molare Anteil an Hexamethylendiamin, bezogen auf das Diamingemisch, zwischen 80 und 95 mol% beträgt.

In einer besonders bevorzugten Ausführungsform der Erfindung liegen die Monomeren der Copolyamide in folgendem molaren Verhältnis vorliegen:
- Caprolactam 15 - 40 mol-%
- Laurinlactam, und/oder 12-Aminododecansäure 30 - 45 mol-%
- mindestens 2 Dicarbonsäuren 20 - 40 mol-%
   der folgenden Verbindungen:
   aliphatische α, ω-Dicarbonsäuren mit 6 bis einschließlich 14 C-Atomen,
   Terephthalsäure, Isophthalsäure, 2,6-Naphthalindicarbonsäure, wobei der Anteil an aromatischen Dicarbonsäuren kleiner als 10 mol%, ist bezogen auf die Gesamtmenge der zuvor genannten Komponenten, die sich auf 100 mol-% ergänzen,
- zu den Dicarbonsäuren eine äquimolare Menge eines Diamingemischs bestehend aus den Substanzen Hexamethylendiamin und Piperazin, wobei der molare Anteil an Hexamethylendiamin, bezogen auf das Diamingemisch, zwischen 75 und 95 mol% beträgt.

Der Schmelzpunkt der erfindungsgemäßen Copolyamide, gemessen nach DIN 53765 ist kleiner als 120°C (peak maximum).

In einer bevorzugten Ausführungsform ist der Schmelzpunkt der Copolyamide, gemessen nach DIN 53765 kleiner als 100°C (peak maximum).

In einer ganz besonders bevorzugten Ausführungsform ist der Schmelzpunkt der erfindungsgemäßen Copolyamide, gemessen nach DIN 53765 kleiner als 90°C (peak maximum).

Das erfindungsgemäß verwendete 2-Methyl-1,5-Diaminopentan ist bevorzugt ein Isomerengemisch, welches als Nebenprodukt 2-Ethyl-1,4-Diaminobutan enthält.

Die erfindungsgemäßen Copolyamide werden als Schmelzkleber verwendet. Insbesondere werden die erfindungsgemäßen Copolymere zur Herstellung von Mono- und MultiFilamenten, Fasern, Folien und Netzen verwendet.

Die erfindungsgemäßen Schmelzkleber können zusätzlich neben den oben genannten Komponenten noch übliche Stabilisatoren, sowie Kettenregler zur Einstellung der Viskosität enthalten. Derartige Zusätze sind dem Fachmann bekannt.

Die erfindungsgemäßen Copolyamide zeichnen sich durch die folgenden Eigenschaften aus:
- tiefer Schmelzpunkt und damit schonende und energiesparende Möglichkeit der Verklebung
- sehr gute Beständigkeit gegenüber chemischer Reinigung
- sehr gute Beständigkeit gegenüber Wäsche
- lange offene Zeit und damit gute Verklebeeigenschaften auch bei technischen Anwendungen.
   Die Verlängerung der offenen Zeit wird bei den erfindungsgemäß beschriebenen Schmelzklebern durch die Verwendung mindestens eines weiteren Diamins neben Hexamethylendiamin erreicht. Werden Piperazin und/oder 2-Methylpentamethylen-diamin in kleinen Anteilen in das Polymer einpolymerisiert, so erhält man Produkte die länger klebefähig bleiben. Bei Piperazin scheint dieser Effekt sogar etwas stärker zu sein.

Besonders überraschend ist die deutliche Verbesserung der Eigenschaften durch Verwendung geringer Mengen an Piperazin und/oder 2-Methyl-1,5-diaminopentan neben Hexamethylendiamin. Es wurde gefunden, daß bis zu einem Anteil von maximal 25 mol-% bezogen auf das Diamingemisch, nicht nur die offene Zeit verlängert, sondern auch die Beständigkeiten verbessert werden.

Überraschenderweise wird bei zu starker Erhöhung des Anteils an Piperazin und/oder 2-Methylpentamethylendiamin in der Rezeptur dieser Vorteil bringende Effekt wieder unterdrückt.

Die Verwendung von Piperazin als Komponente in Copolyamiden für Schmelzkleber ist an sich bekannt.

In den Patenten DE-PS 3730504 und DE-PS 19512004 werden expizit Copolyamide mit Piperazin als Monomer erwähnt. Die in den hierin beschriebenen Copolyamiden verwendete Menge an Piperazin ist aber deutlich höher als in den erfindungsgemäß beschriebenen Copolyamiden und ferner zeichnen sich die dort beanspruchten Copolyamide durch eine schnelle Klebeverfestigung resp. Kristallisation aus, was bedeutet, daß die offene Zeit sehr kurz ist.

Somit zeigen die erfindungsgemäß beschriebenen Copolyamide gegenüber den im Stand der Technik vorhandenen Substanzen den Vorteil der langen offenen Zeit. Außerdem sind sie durch die geringere Konzentration an zusätzlichen Diaminen auch kostengünstiger.

Beim verwendeten 2-Methyl-1,5-diaminopentan handelt es sich um ein handelsübliches Isomerengemisch (Produkt mit der Bezeichnung Dytek® A, der Fa. DUPONT), welches als Nebenprodukt 2-Ethyl-1,4-diaminobutan enthält

Die erfindungs gemäßen Polyamide werden nach den bekannten Verfahren hergestellt, wobei die Herstellung kontinuierlich, oder diskontinuierlich erfolgen kann. Die Komponenten werden statistisch in das Polymer eingebaut.

Wie bereits oben erwähnt ist die offene Zeit besonders bei technischen Verklebungen von entscheidender Bedeutung, wenn der Klebstoff für eine gewisse Zeit aktiv sein soll. Dieses Verhalten zeigen die oben beschriebenen Copolyamide.

Die Substanzen lassen sich auf Grund ihrer Eigenschaften bevorzugt als Schmelzkleber in Form von Granulat, oder als Pulver einsetzen. Ihre Klebewirkung kann aber auch genutzt werden, wenn man Filme, Netze, Fasern, oder Filamente aus dem Polymer herstellt.

### Beispiele:

Die im folgenden genannten statistischen Copolyamide wurden durch hydrolytische Polykondensation der jeweiligen Monomerbausteine synthetisiert.

| **Monomere [mol-%] *** | **Bsp. A** | **Bsp. B** | **Bsp. C** | **Vergleich 1** | **Vergleich 2** | **Vergleich 3** |
|---|---|---|---|---|---|---|
| Caprolactam | 30 | 25 | 27 | 30 | 30 | 40 |
| Laurinlactam | 40 | 50 | 40 | 50 | 40 | 40 |
| Adipinsäure | 10 | - | 3 | - | - | 20 |
| Azelainsäure | 10 | - | 11 | - | 15 | - |
| Sebazinsäure | 10 | 19 | 10 | - | 15 | - |
| Dodecandisäure | - | - | - | 20 | - | - |
| Terephthalsäure | - | 6 | 9 | - | - | - |
| | | | | | | |
| | | | | | | |
| Hexamethylendiamin | 25 | 20 | 25 | - | - | 20 |
| Piperazin | 5 | - | - | 20 | - | - |
| 2-Methylpentandiamin - | | 5 | 8 | - | 30 | - |
| | | | | | | |
| | | | | | | |
| relative Viskosität (0,5% in m-Kresol) | 1,37 | 1,36 | 1,34 | 1,41 | 1,38 | 1,35 |
| Schmelzpunkt /[°C] (nach DIN 53765) | 104 | 100 | 79 | 113 | 109 | 121 |

| | | | | | | |
|---|---|---|---|---|---|---|
| *: Die Summe aus beiden Lactamen und den Disäuren ergibt 100 mol-%. | | | | | | |

Die Diaminmenge ist äquimolar zur Menge der Disäuren.

Zur Bestimmung der anwendungstechnischen Eigenschaften wurden die Polymere auf einer handelsüblichen Kaltmahlanlage vermahlen.

Die Fraktion 80 - 200 µm wurde abgesiebt und hiermit Pulverpunktbeschichtungen mit einer CP-52 Gravurwalze durchgeführt.

Beschichtet wurde eine Baumwolleinlage.

Das Beschichtungsgewicht wurde auf 13 ± 1 g/m² eingestellt.

Die Proben wurden bei Temperaturen von 100-130°C mit folgendem Oberstoff vetpreßt: PES/Wo 55/45 (Polyester-Wollmischung (55/45 w/w ^{.}/.)

Zur Messung der Haftkraft auf Textilien wurden 5cm breite verklebte Textilstreifen in eine Zugmaschine eingespannt.

Die Prüfparameter waren bei allen Messungen konstant:

| | |
|---|---|
| Prüfgeschwindigkeit: | 100 mm/min |
| Prüfkörperbreite: | 50 mm |
| Prüfstrecke: | 80 mm |
| Vorkraft: | 0N |
| Prüftemperatur: | 25°C |

Die nachfolgende Tabelle gibt die Haftkräfte für die erfindungsgemäß hergestellten Copolyamide A-C, sowie die Vergleichsbeispiele 1-3 an.

Dabei bedeuten:
- OH:: Originalhaftung
- FW:: Haftung nach Feinwäsche (40°C)
- CR:: Haftung nach chemischer Reinigung
- T:: Verpreßtemperatur

Trennkraft der einzelnen Copolyamide auf Polyester/Wolle
Einheit: [N / 5cm]

| **[N /5cm]** | **A** | **B** | **C** | **1** | **2** | **3** |
|---|---|---|---|---|---|---|
| | | | | | | |
| **T =100°C** | | | | | | |
| OH | 6,5 | 7,8 | 10 | 3,0 | 3,5 | 0,5 |
| FW | 5,5 | 6,9 | 7,0 | 1,3 | 1,4 | 0 |
| CR | 6,3 | 7,5 | 9,0 | 2,0 | 2,0 | 0 |
| | | | | | | |

| **T=110°C** | | | | | | |
|---|---|---|---|---|---|---|
| OH | 8,5 | 10 | 13,5 | 4,5 | 6,8 | 1,9 |
| FW | 7,7 | 9,4 | 11,0 | 2,8 | 4,4 | 0 |
| CR | 8,5 | 9,5 | 12,5 | 4,0 | 6,0 | 0,5 |
| | | | | | | |

| **T= 120°C** | | | | | | |
|---|---|---|---|---|---|---|
| OH | 11 | 13 | 16 | 7,5 | 10 | 4,0 |
| FW | 9,5 | 11 | 13 | 5,0 | 7,5 | 1,9 |
| CR | 10 | 13 | 14,5 | 6,0 | 8,1 | 2,5 |
| | | | | | | |

| **T= 130°C** | | | | | | |
|---|---|---|---|---|---|---|
| OH | 13 | 15 | 18 | 10 | 13 | 7,5 |
| FW | 11 | 13 | 16 | 8,2 | 9,6 | 5,0 |
| CR | 13 | 14 | 16,5 | 9,1 | 11 | 5,0 |

Die Quantifizierung der offenen Zeit erfolgte nach ASTM D 4497-85.

Als erstes Substrat diente eine dichte PES-Wirkware
Als zweites Substrat wurde ein reiner Wollstoff verwendet.

Es wurden Messungen bei 140°C und 170°C durchgeführt

Die verwendete Belastung war 100g.

Offene Zeit nach ASTM D 4497-85

| | **A** | **B** | **C** | **1** | **2** | **3** |
|---|---|---|---|---|---|---|
| T =140°C | | | | | | |
| offene Zeit / [s] | **60** | **50** | **60** | **10** | **20** | **20** |
| Schichtdicke / [µm] | 520 | 600 | 550 | 610 | 540 | 570 |
| | | | | | | |

| T =170°C | | | | | | |
|---|---|---|---|---|---|---|
| offene Zeit / [s] | **70** | **50** | **70** | **20** | **30** | **20** |
| Schichtdicke / [µm] | 470 | 520 | 530 | 480 | 490 | 580 |

## Patentansprüche

1. Copolyamide, bestehend aus Polykondensationsprodukten der folgenden Komponenten:
- Caprolactam 10 - 45 mol-%
- Laurinlactam, und/oder 12-Aminododecansäure 30 - 55 mol-%
- mindestens 2 Dicarbonsäuren 20 - 50 mol-% der folgenden Verbindungen:
aliphatische α, ω-Dicarbonsäuren mit 6 bis einschließlich 14 C-Atomen,
Terephthalsäure, Isophthalsäure und 2,6-Naphthalindicarbonsäure, wobei der Anteil an aromatischen Dicarbonsäuren kleiner als 10 mol%, ist bezogen auf die Gesamtmenge der zuvorgenannten Komponenten, die sich auf 100 mol-% ergänzen,
- zu den Dicarbonsäuren eine äquimolare Menge eines Diamingemischs, ausgewählt aus der Gruppe aus den folgenden Substanzen:
Hexamethylendiamin, Piperazin und/oder 2-Methyl-1,5-diaminopentan,
wobei der molare Anteil an Hexamethylendiamin, bezogen auf das Diamingemisch, zwischen 75 und 95 mol-% beträgt.

2. Copolyamide nach Anspruch 1, **dadurch gekennzeichnet, daß** die Monomeren in folgendem molaren Verhältnis vorliegen:
- Caprolactam 15 - 40 mol-%
- Laurinlactam, und/oder 12-Aminododecansäure 30 - 45 mol-%
- mindestens 2. Dicarbonsäuren 20 - 40 mol-% der folgenden Verbindungen:
aliphatische α, ω-Dicarbonsäuren mit 6 bis einschließlich 14 C-Atomen,
Terephthalsäure, Isophthalsäure und 2,6-Naphthalindicarbonsäure, wobei der Anteil an aromatischen Dicarbonsäuren kleiner als 10 mol-%, ist bezogen auf die Gesamtmenge der zuvorgenannten Komponenten, die sich auf 100 mol-% ergänzen,
- zu den Dicarbonsäuren eine äquimolare Menge eines Diamingemischs, ausgewählt aus der Gruppe aus den folgenden Substanzen:
Hexamethylendiamin, Piperazin und/oder 2-Methyl-1,5-diaminopentan,
wobei der molare Anteil an Hexamethylendiamin, bezogen auf das Diamingemisch, zwischen 80 und 95 mol-% beträgt.

3. Copolyamide nach Anspruch 1, **dadurch gekennzeichnet, daß** die Monomeren in folgendem molaren Verhältnis vorliegen:
- Caprolactam 15-40 mol-%
- Laurinlactam, und/oder 12-Aminododecansäure 30 - 45 mol-%
- mindestens 2 Dicarbonsäuren 20-40 mol-% der folgenden Verbindungen:
aliphatische ∝, ω-Dicarbonsäuren mit 6 bis einschließlich 14 C-Atomen,
Terephthalsäure, Isophthalsäure, 2,6-Naphthalindicarbonsäure, wobei der Anteil an aromatischen Dicarbonsäuren kleiner als 10 mol%, ist bezogen auf die Gesamtmenge der zuvor genannten Komponenten, die sich auf 100 mol-% ergänzen,
- zu den Dicarbonsäuren eine äquimolare Menge eines Diamingemischs bestehend aus den Substanzen Hexamethylendiamin und Piperazin, wobei der molare Anteil an Hexamethylendiamin, bezogen auf das Diamingemisch, zwischen 75 und 95 mol-% beträgt.

4. Copolyamide nach den Ansprüchen 1-3, **dadurch gekennzeichnet, daß** der Schmelzpunkt der Copolyamide gemessen nach DIN 53765 kleiner als 120°C ist (Peakmaximum).

5. Copolyamide nach den Ansprüchen 1-3, **dadurch gekennzeichnet, daß** der Schmelzpunkt der Copolyamide gemessen nach DIN 53765 kleiner als 100°C ist (Peakmaximum).

6. Copolyamide nach den Ansprüchen 1-3, **dadurch gekennzeichnet, daß** der Schmelzpunkt der Copolyamide gemessen nach DIN 53765 kleiner als 90°C ist (Peakmaximum).

7. Copolyamide nach einem der vorhergehenden Ansprüche, **dadurch gekennzeichnet, daß** das verwendete 2-Methyl-1,5-diaminopentan ein Isomerengemisch ist, welches als Nebenprodukt 2-Ethyl-1,4-diaminobutan enthält.

8. Verwendung von Copolyamiden nach den Ansprüchen 1-7 als Schmelzkleber.

9. Verwendung von Copolyamiden nach den Ansprüchen 1-3 zur Herstellung von Mono- und Multifilamenten, Fasern, Folien und Netzen.

## Claims

1. Copolyamides consisting of polycondensation products of the following components:
- caprolactam 10 to 45 mole%
- laurolactam, and/or 12-amino dodecanenic acid 30 to 55 mole%
- at least 2 dicarboxylic acids 20 to 50 mole% of the following compounds:
aliphatic α,ω-dicarboxylic acids with 6 up to and including 14 C atoms,
terephthalic acid, isophthalic acid, and 2,6-naphthalene dicarboxylic acid, wherein the fraction of aromatic dicarboxylic acids is less than 10 mole%, with respect to the total amount of the above-mentioned components, which add up to 100 mole%,
- a diamine mixture in an amount that is equimolar to that of the dicarboxylic acids, selected from the group of the following substances:
hexamethylene diamine, piperazine, and/or 2-methyl-1,5-diaminopentane, wherein the molar fraction of hexamethylene diamine is between 75 and 95 mole%, with
respect to the diamine mixture.

2. Copolyamides according to claim 1, **characterized in that** the monomers are present in the following molar ratios:
- caprolactam 15 to 40 mole%
- laurolactam and/or 12-amino dodecanenic acid 30 to 45 mole%
- at least 2 dicarboxylic acids 20 to 40 mole% of the following compounds:
aliphatic α,ω-dicarboxylic acids with 6 up to and including 14 C atoms,
terephthalic acid, isophthalic acid and 2,6-naphthalene dicarboxylic acid, wherein the fraction of aromatic dicarboxylic acids is less than 10 mole%, with respect to the total amount of the above-mentioned components, which add up to 100 mole%,
- a diamine mixture in an amount that is equimolar to that of the dicarboxylic acids, selected from the group of the following substances:
hexamethylene diamine, piperazine, and/or 2-methyl-1,5-diaminopentane, wherein the molar fraction of hexamethylene diamine is between 80 and 95 mole%, with respect to the diamine mixture.

3. Copolyamides according to claim 1, **characterized in that** the monomers are present in the following molar ratios:
- caprolactam 15 to 40 mole%
- laurolactam and/or 12-amino dodecanenic acid 30 to 45 mole%
- at least 2 dicarboxylic acids 20 to 40 mole% of the following compounds:
aliphatic α,ω-dicarboxylic acids with 6 up to and including 14 C atoms,
terephthalic acid, isophthalic acid and 2,6-naphthalene dicarboxylic acid, wherein the fraction of aromatic dicarboxylic acids is less than 10 mole%, with respect to the total amount of the above-mentioned components, which add up to 100 mole%,
- a diamine mixture in an amount that is equimolar to that of the dicarboxylic acids, consisting of the substances hexamethylene diamine and piperazine, wherein the molar fraction of hexamethylene diamine is between 75 and 95 mole% with respect to the diamine mixture.

4. Copolyamides according to claims 1 to 3, **characterized in that** the melting point of the copolyamides measured in accordance with DIN 53765 is less than 120°C (peak maximum).

5. Copolyamides according to claims 1 to 3, **characterized in that** the melting point of the copolyamides measured in accordance with DIN 53765 is less than 100°C (peak maximum).

6. Copolyamides according to claims 1 to 3, **characterized in that** the melting point of the copolyamides measured in accordance with DIN 53765 is less than 90°C (peak maximum).

7. Copolyamides according to one of the preceding claims, **characterized in that** the used 2-methyl-1,5-diaminopentane is an isomer mixture which contains 2-ethyl-1,4-diaminobutane as a by-product.

8. The use of copolyamides according to claims 1 to 7 as hotmelt adhesives.

9. The use of copolyamides according to claims 1 to 3 for the production of mono- and multifilaments, fibers, films and nets.

## Revendications

1. Copolyamides se composant des produits de polycondensation des composants suivants :
- caprolactame 1 0 à 45% en moles
- lactame de laurine et/ou acide de 12-aminododécane 30 à 55% en moles
- au moins 2 acides dicarboxyliques 20 à 50% en moles des composés suivants :
l'acide α, ω-dicarboxylique aliphatique ayant de 6 à 14 atomes de carbone inclus, l'acide téréphtalique, l'acide isophtalique et l'acide 2,6-naphtaline dicarboxylique, la proportion d'acide dicarboxylique aromatique inférieure à 10% en moles étant rapportée à la quantité totale des composants susmentionnés qui se complètent pour atteindre 100% en moles
- parmi les acides dicarbonxyliques, une quantité équimolaire d'un mélange de diamines sélectionnées dans le groupe se composant des substances suivantes :
l'hexaméthylènediamine, la pipérazine et/ou le 2-méthyl-1,5-diaminopentane, la proportion molaire en hexaméthylènediamine rapportée au mélange diamine s'élevant de 75 à 95 % en moles.

2. Copolyamides selon la revendication 1, **caractérisés en ce que** les monomères sont présents dans les rapports molaires suivants :
- caprolactame 15 à 40% en moles
- lactame de laurine et/ou acide de 12-aminododécane 30 à 45% en moles
- au moins 2 acides dicarboxyliques 20 à 40% en moles des composés suivants :
l'acide α, ω-dicarboxylique aliphatique ayant de 6 à 14 atomes de carbone inclus, l'acide téréphtalique, l'acide isophtalique et l'acide 2,6-naphtaline dicarboxylique, la proportion d'acide dicarboxylique aromatique inférieure à 10% en moles étant rapportée à la quantité totale des composants susmentionnés qui se complètent pour atteindre 100% en moles,
- parmi les acides dicarboxyliques, une quantité équimolaire d'un mélange de diamines sélectionnées dans le groupe se composant des substances suivantes :
l'hexaméthylènediamine, la pipérazine et/ou le 2-méthyl-1,5-diaminopentane, la proportion molaire en hexaméthylènediamine rapportée au mélange diamine s'élevant de 80 à 95% en moles.

3. Copolyamides selon la revendication 1, **caractérisés en ce que** les monomères sont présents dans les rapports molaires suivants :
- caprolactame 15 à 40% en moles
- lactame de laurine et/ou acide de 12-aminododécane 30 à 45% en moles
- au moins 2 acides dicarboxyliques 20 à 40% en moles des composés suivants :
l'acide α, ω-dicarboxylique aliphatique ayant de 6 à 14 atomes de carbone inclus, l'acide téréphtalique, l'acide isophtalique et l'acide 2,6-naphtaline dicarboxylique, la proportion d'acide dicarboxylique aromatique inférieure à 10% en moles étant rapportée à la quantité totale des composants susmentionnés qui se complètent pour atteindre 100% en moles
- parmi les acides dicarboxyliques, une quantité équimolaire d'un mélange de diamines sélectionnées dans le groupe se composant des substances suivantes :
l'hexaméthylènediamine, la pipérazine et/ou le 2-méthyl-1,5-diaminopentane, la proportion molaire en hexaméthylènediamine rapportée au mélange diamine s'élevant de 75 à 95% en moles.

4. Copolyamides selon les revendications 1 à 3, **caractérisés en ce que** le point de fusion des copolyamides mesuré selon la norme DIN 53765 est inférieur à 120°C (crête maximum).

5. Copolyamides selon les revendications 1 à 3, **caractérisés en ce que** le point de fusion des copolyamides mesuré selon la norme DIN 53765 est inférieur à 100°C (crête maximum).

6. Copolyamides selon les revendications 1 à 3, **caractérisés en ce que** le point de fusion des copolyamides mesuré selon la norme DIN 53765 est inférieur à 90°C (crête maximum).

7. Copolyamides selon l'une quelconque des revendications précédentes, **caractérisés en ce que** le 2-méthyl-1,5-diaminopentane est un mélange isomère qui contient comme produit secondaire du 2-éthyl-1,4-diaminobutane.

8. Utilisation de copolyamides selon les revendications 1 à 7 en tant que colle thermofusible.

9. Utilisation de copolyamides selon les revendications 1 à 3 pour la fabrication de mono- et multifilaments, de fibres, de feuilles et de réseaux.
